# FASCICULE DE BREVET EUROPEEN

(11) **EP 0 589 799 B1**
(45) Date de publication et mention de la délivrance du brevet: **18.12.1996**
(21) Numéro de dépôt: 93402335.9
(22) Date de dépôt: 24.09.1993
(51) Int. Cl.: G01P 21/02

(54) **Capteur incrémental à signalisation de défaillance**
Inkrementalgeber mit Fehlererkennung
Incremental sensor with failure detection

(30) Priorité: 25.09.1992 FR 9211479
(43) Date de publication de la demande: 30.03.1994
(73) Titulaire: VALEO ELECTRONIQUE, 94000 Creteil (FR)
(72) Inventeur: Bessiere, Frédéric, F-75012 Paris (FR)
(74) Mandataire: Gamonal, Didier

(56) Documents cités:
- EP-A- 0 130 762
- GB-A- 2 045 950
- PATENT ABSTRACTS OF JAPAN vol. 12, no. 278 (P-738) 1 Août 1988 & JP-A-63 058 167 (AKEBONO BRAKE IND CO LTD) 12 Mars 1988
- ELEKTRONIK vol. 40, no. 4 , 19 Février 1991 , ALLEMAGNE pages 86 - 97 K. FISCHER 'Drehzahlerfassung mit Differenz-Hall-IC'

## Description

La présente invention concerne un capteur incrémental à signalisation de défaillance. Elle trouve application notamment dans un dispositif de direction assistée de véhicule qui utilise au moins un capteur incrémental comme un capteur de vitesse pour déterminer une condition d'assistance.

Quand le capteur incrémental est utilisé pour entrer des paramètres d'asservissement dans un calculateur d'assistance pour un dispositif de direction assistée de véhicule, toute défaillance du capteur peut, pendant les premiers instants au moins, mettre en danger gravement la sécurité du véhicule.

Dans le document JP-A-63058167 (Patent Abstracts of Japan, vol.12, no.278 (P-738) 3125, August 1, 1988), il a déjà été proposé un détecteur de défaillance pour un capteur de rotation comme une roue dentée, consistant à opérer une division en fréquence du signal de sortie du capteur avant de l'injecter dans un circuit de mesure de largeur d'impulsion afin de pouvoir détecter une impulsion de largeur anormale. Un tel dispositif est compliqué dans la mesure où il nécessite un traitement particulier du signal de sortie du capteur et requiert l'emploi d'un circuit de mesure de largeur d'impulsion.

Dans l'état de la technique, on a également déjà proposé un capteur incrémental comme un capteur de vitesse du genre comportant un élément mobile muni de dents qui défilent devant au moins un organe de lecture produisant un signal de lecture qui est transmis à un moyen de mesure de la durée séparant deux phases successives du signal, dont le signal de sortie est transmis à un moyen produisant un signal de défaillance quand le signal de sortie varie de façon non continue, le moyen de mesure de la durée séparant deux phases successives du signal de lecture comportant une horloge à une fréquence largement plus élevée que celle du signal de lecture, et qui est fourni en entrée d'un compteur qui démarre dans une première phase du signal de lecture et qui est lu lors d'une phase correspondante ultérieure.

Le principe de la détection de défaillance du capteur consiste à détecter une éventuelle discontinuité dans la durée s'écoulant entre deux phases successives du signal de mesure, sachant que la vitesse de rotation de l'élément mobile n'est pas connue à priori.

Un tel capteur, conforme au préambule de la revendication 1, est par exemple décrit dans le document GB-A-2 045 950, qui envisage son application à un système d'assistance de freinage pour véhicule automobile.

Dans le système décrit dans ce document, la sortie du compteur est transmise à un circuit déterminant, sur un tour complet de l'élément mobile, la durée moyenne ainsi que la durée minimale et la durée maximale entre deux phases successives du signal de mesure, la différence entre, d'une part, la durée moyenne et la durée minimale, et, d'autre part, entre la durée maximale et la durée moyenne étant comparées à une valeur de référence contenue dans un registre d'un microprocesseur.

Un tel système n'est pas pleinement satisfaisant dans la mesure où une éventuelle défaillance du capteur ne peut être détectée, dans le pire cas, que lorsque l'élément mobile a accompli un tour complet. En effet, selon la nature de l'élément mobile sur lequel est réalisé la mesure de rotation et donc sa vitesse de rotation caratéristique, la détection peut intervenir trop tard pour assurer une prise en compte de la défaillance du capteur par le système qui l'incorpore.

L'invention vise à pallier cet inconvénient de l'état de la technique. A cet effet, l'invention se caractérise en ce que la sortie du compteur est transmise comme première entrée d'un comparateur dont une seconde entrée reçoit un signal de référence produit par un registre de référence et dont une sortie passe à l'état actif si la valeur de comptage dépasse ladite référence, et en ce que la valeur de référence est obtenue à partir d'une pluralité de valeurs précédentes du signal de lecture à l'aide d'un circuit de calcul d'une moyenne glissante.

Le fait d'utiliser une moyenne glissante sur un petit nombre de valeurs précédentes du signal de lecture permet en effet de détecter rapidement une éventuelle discontinuité dans la durée entre deux phases successives du signal de lecture.

Selon une caractéristique avantageuse de l'invention, à chaque instant t, la valeur de référence est égale à deux fois la valeur de la moyenne glissante, et est obtenue par un décalage d'un rang à gauche du nombre binaire représentant ladite valeur à la sortie du circuit de calcul d'une moyenne glissante, de manière à détecter qu'une dent de l'élément mobile est manquante.

Selon une autre caractéristique de l'invention, le nombre de valeurs précédentes du signal de lecture prises en compte pour le calcul de la moyenne glissante est égal à une puissance entière de 2. De cette façon, la division binaire dans le calcul de la moyenne glissante est réalisée par un simple décalage à droite.

D'autres caractéristiques et avantages de la présente invention seront mieux compris à l'aide de la description et des dessins qui sont :
- la figure 1 : un schéma de principe d'un capteur incrémental selon l'invention ;
- la figure 2 : un chronogramme de mise en oeuvre de l'invention ;
- la figure 3 : un autre chronogramme de mise en oeuvre de l'invention ;
- la figure 4 : un schéma d'un mode de réalisation d'une partie de signalisation de l'invention.

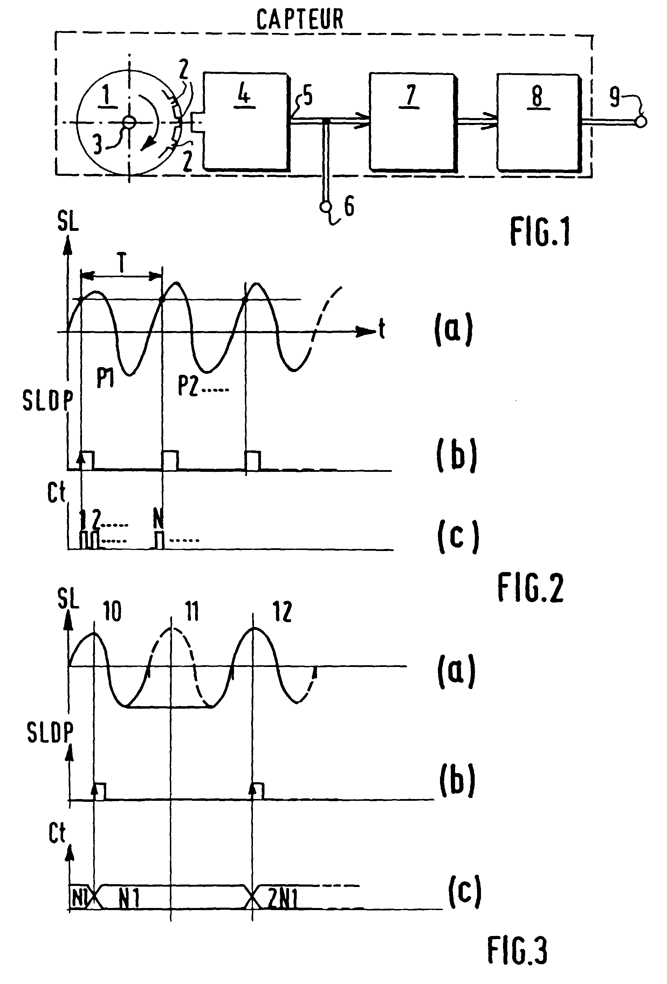

A la figure 1, on a représenté un mode de réalisation d'un capteur selon l'invention. Le capteur comporte un élément mobile 1, doté de dents 2. L'élément mobile 1 est réalisé sous la forme d'un disque monté sur un arbre 3 entraîné en rotation.

Le capteur comporte aussi un organe de lecture 4 devant lequel défile les dents 2 de la roue dentée. Quand une dent est entièrement devant l'organe de lecture, le signal de sortie est d'amplitude maximale. Quand l'organe de lecture voit l'intervalle entre deux dents successives, l'amplitude du signal de sortie de l'organe de lecture est minimale.

De ce fait, on conçoit que le comptage du nombre de dents, détecté par le signal de lecture, soit représentatif de la position angulaire de l'arbre 3 par rapport à une position de référence.

De ce fait, on conçoit aussi que la fréquence fondamentale du signal de détection 6 ou de lecture, pris sur une sortie 5 de l'organe de lecture 4, soit représentative de la valeur instantanée de la vitesse angulaire de l'arbre 3.

Dans l'un ou l'autre cas, le signal de lecture 6 est envoyé à un dispositif d'exploitation comme le calculateur d'un dispositif de direction assistée. Le signal de lecture 6 peut, selon la technologie du capteur, être de forme analogique, comme une forme sensiblement sinusoïdale, ou de forme numérique, comme une impulsion, monophase ou biphase ou encore en modulation de largeur d'impulsions PWM.

Selon l'invention, la sortie 5 de l'organe de lecture 4 est aussi connectée à l'entrée d'un moyen de mesure 7 de la durée T entre deux phases P1 et P2 du signal de lecture.

A la figure 2, on a représenté un chronogramme (a) qui représente de manière illustrative un signal de sortie d'un organe de lecture. De forme sensiblement sinusoïdale, le signal de lecture SL présente entre deux phases P1, P2 une durée T. Au chronogramme (b), on a représenté un signal logique dont chaque front montant est produit à la détection de la phase P1, P2 En démarrant un compteur d'impulsions lors de la détection de la phase P1, on peut déterminer le nombre d'impulsions d'une horloge jusqu'à la phase suivante P2, soit N ce nombre.

Lors du front montant du signal logique de détection de phases SLDP, on arrête le comptage et on transfère le contenu N (voir chronogramme (c)) du compteur vers un moyen générateur 8 d'un signal de défaillance 9, produit en sortie du capteur de l'invention.

Dans la situation de la figure 2, le signal de lecture SL est régulier. De ce fait, la durée T entre deux phases successives est constante si la vitesse de rotation de l'élément mobile 1 est constante et variable continument, si la vitesse de rotation de l'élément mobile 1 est variable continûment.

A la figure 3, on a représenté des chronogrammes caractéristiques d'une situation dans laquelle l'organe de lecture 4 a détecté une dent manquante (indiquée par la sinusoïde 11 en tirets du chronogramme (a)) entre deux dents de la roue dentée (indiquées par les sinusoïdes 10 et 12 en trait plein du chronogramme (a)).

Au chronogramme (b) de la figure 3, il manque une impulsion correspondant à la phase dans la sinusoïde 11. Il vient que après avoir compté N1 impulsions d'horloge lors de l'arrivée de la phase de la sinusoïde 10, puis de la sinusoïde 12, le moyen de mesure 7 de la durée entre deux phases successives doit attendre la phase correspondante à la sinusoïde 12. De ce fait, après l'arrivée de la phase de la sinusoïde 12, le moyen de mesure 7 a compté 2N1 impulsions d'horloge (voir chronogramme (c)).

On constate donc une discontinuité dans la suite des valeurs de la durée interphases T qui valaient N1, N1, 2N1, N1 ....

La comparaison de la durée mesurée T à une valeur de référence permet de faire changer d'état la sortie d'un comparateur qui compose le moyen 9 générateur d'un signal de défaillance SD qui devient actif dès que cette valeur de seuil est dépassée.

Dans un mode de réalisation, la valeur de référence est calculée à partir de p valeurs de données de mesure N de la durée interphases T en calculant une moyenne glissante MG, qui, à la date t, valait MG(t) et qui vaut MG(t+1) = MG (t) + (N1/p) si la mesure du temps interphases vaut N1 à la date t+1. Dans un exemple de réalisation, la valeur de référence est égale à 2. MG(t). Le nombre p de valeurs précédentes des durées interphases est pris égal à une puissance entière de 2 pour que la division Nl/p dans le calcul de la moyenne glissante soit obtenue par un simple décalage à droite sur N1.

La comparaison est positive si N1> 2.MG(t) à la date t+1 et le signal de défaillance est mis à l'état actif.

Si la comparaison précitée est négative, le signal de défaillance reste inactif et on remet à jour la valeur de la moyenne glissante MG(t+1) dans le registre de référence.

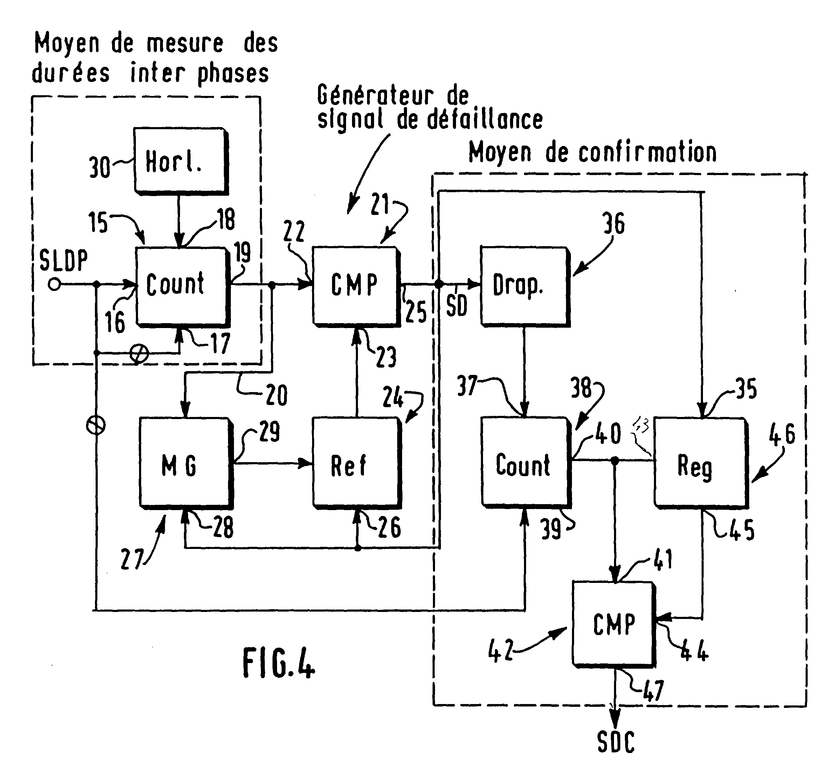

On a représenté à la figure 4, un exemple de réalisation d'une telle disposition du moyen générateur de signal de défaillance.

Le signal logique de détection de phases SLDP produit par le circuit de mesure de la durée interphases (7 à la figure 1) est connecté à une entrée de démarrage du comptage 16 d'un compteur 15. Sur son entrée de comptage 18, le compteur 15 reçoit les impulsions d'une horloge 30, à une fréquence notablement supérieure à celle du mouvement des dents.

Le compteur 15 comporte aussi une entrée 17 de transfert du contenu du compteur lors du cycle précédent par une sortie binaire 19 d'une part sur l'entrée 22 d'un comparateur binaire 21 et d'autre part par une ligne 20 à l'entrée d'un circuit 27 de calcul de la moyenne glissante MG.

Sur une autre entrée 23 du circuit de comparaison 21, on reçoit le contenu d'un registre de référence 24.

Dans le mode de réalisation préféré, la valeur de référence est égale à 2.MG(t). Cette valeur de référence s'obtient par un décalage de un rang à gauche du nombre binaire représentant MG(t) à la sortie 29 du circuit 27.

La sortie 25 du comparateur 21 produit le signal de défaillance SD. Ce signal est aussi retourné à des entrées convenables 26 d'autorisation d'écriture dans le registre 24, et 28 d'autorisation de calcul du circuit 27 de calcul de la moyenne glissante en sorte que cette écriture et ce calcul sont effectués seulement si le signal SD n'est pas actif.

Le signal SD de défaillance est ensuite, dans un mode préféré de réalisation, transmis à un moyen de confirmation du défaut.

Le moyen de confirmation comporte une bascule 36 qui permet de placer le moyen de confirmation dans un état actif quand apparaît un défaut SD. La bascule 36 détecte le front montant de SD et place sa sortie à l'état haut représentant un drapeau (ou indicateur) de défaut qui est actif quand le signal SD devient actif sur son entrée. Le drapeau est transmis à l'entrée 37 d'autorisation de comptage d'un compteur 38. L'entrée 39 d'horloge de comptage reçoit un signal périodique, préférentiellement le signal d'entrée SLDP éventuellement muni d'un retard permettant de rattraper le nombre de transitions sur les autres voies. Le signal SLDP porte l'indication des transitions de phases du signal de lecture 6.

La sortie de comptage 40 est transmise à l'entrée 43 d'écriture d'un registre 46 qui contient une variable représentative du nombre de dents ou impulsions SLDP comptées entre deux défauts détectés SD. Le registre 46 est remis à jour par son entrée d'écriture 43 dès qu'une nouvelle défaillance est détectée par le signal SD connectée à son entrée d'autorisation d'écriture 35.

La sortie de lecture du registre 46 est transmise à une entrée 44 d'un comparateur 42 dont l'autre entrée 41 reçoit aussi le signal de sortie de comptage 40. Quand la sortie de comptage 40,41 atteint la valeur du registre 46, la sortie 47 monte de façon permanente et sert de signal de défaut confirmé SDC. Le compteur 38 est alors remis à zéro pour permettre une reprise éventuelle de la détection bien que fautive.

La présente invention a été décrite sous forme d'un exemple illustratif. En particulier, la nature de l'organe de lecture 4 est indépendante de l'invention. L'organe de lecture peut être de type optique ou magnétique ou capacitif ou autre.

De même, le circuit constituant le moyen 7 de mesure des durées interphases T et le moyen 8 générateur du signal de défaillance SD peuvent être réalisés directement sur le capteur ou à distance de celui-ci, notamment sur le dispositif d'exploitation du signal de vitesse 6. Ils peuvent être réalisés à l'aide d'un microcontrôleur, d'une partie d'un microcontrôleur ou encore par un circuit intégré spécialisé.

Le signal de défaillance peut prendre aussi plusieurs valeurs. Notamment, il est possible de compter le nombre de dents défaillantes, grâce à plusieurs comparaisons à 2.MG(t), 3.MG(t) ..., (plus généralement à un nombre entier de fois MG(t) qui indique le nombre de dents défaillantes) ou même d'autres cas de défaillance comme le fait pour le capteur d'être désaxé par rapport à l'arbre 3 de rotation en détectant une dérive périodique liée à chaque révolution de la roue 1.

Il est aussi possible d'enregistrer dans une mémoire inscriptible non volatile sous le contrôle du dispositif exploitant le signal 6, les dates et la nature des défaillances. La mémoire, par exemple de type programmable et effaçable électriquement, peut être exploitée par le dispositif ou encore par un dispositif de diagnostic réservé à la maintenance et la réparation.

Le capteur de l'invention est particulièrement adapté pour équiper le capteur de vitesse véhicule et le capteur de la vitesse de rotation du moteur thermique d'un véhicule équipé d'un dispositif de direction assistée des roues directrices.

En effet, la condition d'assistance mise en oeuvre exploite de tels signaux et toute défaillance doit pouvoir être détectée aussi rapidement que possible pour empêcher toute assistance intempestive ou erronée.

## Revendications

1. Capteur incrémental comme un capteur de vitesse du genre comportant un élément mobile muni de dents qui défilent devant au moins un organe de lecture destiné à produire un signal de lecture, représentatif de la position et/ou de la vitesse de l'élément mobile, et transmis à un moyen de mesure de la durée séparant deux phases successives du signal dont le signal de sortie est transmis à un moyen produisant un signal de défaillance (SD) quand le signal de sortie varie de façon non continue, le moyen de mesure de la durée séparant deux phases successives du signal de lecture comportant une horloge à une fréquence largement plus élevée que celle du signal de lecture, et qui est fourni en entrée d'un compteur (15) qui démarre dans une première phase du signal de lecture et qui est lu lors d'une phase correspondante ultérieure, caractérisé en ce que la sortie du compteur est transmise comme première entrée (22) d'un comparateur (21) dont une seconde entrée (23) reçoit un signal de référence produit par un registre (24) de référence et dont une sortie (25) passe à l'état actif si la valeur de comptage dépasse ladite référence, et en ce que la valeur de référence est obtenue à partir d'une pluralité de valeurs précédentes du signal de lecture à l'aide d'un circuit (27) de calcul d'une moyenne glissante.

2. Capteur selon la revendication 1, caractérisé en ce que, à chaque instant t, la valeur de référence est égale à deux fois la valeur MG (t) de la moyenne glissante, et est obtenue par un décalage d'un rang à gauche du nombre binaire représentant ladite valeur à la sortie (29) du circuit (27) de calcul d'une moyenne glissante.

3. Capteur selon la revendication 1, caractérisé en ce que le nombre de valeurs précédentes du signal de lecture prises en compte pour le calcul de la moyenne glissante est égal à une puissance entière de 2.

4. Capteur selon la revendication 1, caractérisé en ce que la sortie (25) du comparateur (21) produit le signal de défaillance (SD) qui est aussi retourné à des entrées convenables (26) d'autorisation d'écriture dans le registre (24), et (28) d'autorisation de calcul du circuit (27) de calcul de la moyenne glissante.

5. Capteur selon l'une des revendications précédentes, caractérisé en ce que le signal de défaillance (SD) est transmis à un moyen de confirmation (37,47) du défaut qui produit un signal de défaillance confirmé (SDC) à destination d'un dispositif d'exploitation du capteur.

6. Capteur selon la revendication 5, caractérisé en ce que le moyen de confirmation comporte un compteur (38) qui, à l'apparition d'un défaut (SD) sur son entrée d'autorisation de comptage (37), compte un signal périodique comme le nombre de dents sur le signal (SLDP) des transitions de phases du signal de lecture (6), transmis sur son entrée d'horloge (39), la sortie de comptage (40) étant fournie à une première entrée (41) d'un comparateur (42) dont une seconde entrée (44) est connectée à la sortie de lecture (45) d'un registre (46) contenant le nombre de dents comptées entre deux défauts successifs, la sortie de comptage (47) produisant le signal de défaut confirmé (SDC).

7. Capteur selon la revendication 6, caractérisé en ce que le registre (46) est remis à jour par son entrée d'écriture (43) dès qu'une nouvelle défaillance est détectée par le signal de défaillance (SD) connectée à son entrée d'autorisation d'écriture (35).

8. Capteur selon la revendication 7, caractérisé en ce que le compteur (38) est remis à zéro dès que le signal de défaut confirmé (SDC) passe à l'état actif.

9. Capteur selon l'une des revendications précédentes, caractérisé en ce que il comporte une mémoire inscriptible non volatile sous le contrôle du dispositif exploitant le signal (6) qui enregistre les dates et la nature des défaillances, la mémoire, par exemple de type programmable et effaçable électriquement, étant exploitée par le dispositif ou encore par un dispositif de diagnostic réservé à la maintenance et la réparation.

10. Utilisation d'un capteur selon l'une des revendications précédentes comme capteur de la vitesse d'un véhicule équipé d'un dispositif de direction assistée des roues directrices et/ou comme capteur de la vitesse de rotation du moteur thermique d'un tel véhicule.

## Patentansprüche

1. Inkrementalgeber wie ein Geschwindigkeitsgeber, der ein bewegliches Element mit Zähnen umfaßt, die vor wenigstens einem Leseorgan vorbeilaufen, das ein für die Position und/oder die Geschwindigkeit des beweglichen Elements repräsentatives Lesesignal erzeugt, das an ein Mittel zur Messung der Dauer zwischen zwei aufeinanderfolgenden Phasen des Signals übertragen wird, dessen Ausgangssignal an ein Mittel übertragen wird, das ein Fehlersignal (SD) erzeugt, wenn sich das Ausgangssignal in nicht kontinuierlicher Weise verändert, wobei das Mittel zur Messung der Dauer zwischen zwei aufeinanderfolgenden Phasen des Lesesignals einen Taktgeber mit einer deutlich höheren Frequenz als die des Lesesignals umfaßt, und das an den Eingang eines Zählers (15) geleitet wird, der in einer ersten Phase des Lesesignals startet und in einer entsprechenden späteren Phase abgelesen wird , **dadurch gekennzeichnet**, daß der Ausgang des Zählers als erster Eingang (22) eines Vergleichers (21) übertragen wird, dessen zweiter Eingang (23) ein Referenzsignal empfängt, das durch ein Referenzregister (24) erzeugt wird, und dessen Ausgang in den aktiven Zustand übergeht, wenn der Zählwert den besagten Referenzwert überschreitet, und daß der Referenzwert aus einer Mehrzahl von vorangehenden Werten des Lesesignals anhand einer Schaltung (27) zur Berechnung eines gleitenden Durchschnitts erhalten wird.

2. Geber nach Anspruch 1, **dadurch gekennzeichnet**, daß zu jedem Zeitpunkt t der Referenzwert gleich dem Zweifachen des Werts (MGt) des gleitenden Durchschnitts ist und durch eine um einen Rang nach links erfolgende Verschiebung der den besagten Wert repräsentierenden Binärzahl am Ausgang (29) der Schaltung (27) zur Berechnung des gleitenden Durchschnitts erhalten wird.

3. Geber nach Anspruch 1, **dadurch gekennzeichnet**, daß die Anzahl der vorangehenden Werte des Lesesignals, die bei der Berechnung des gleitenden Durchschnitts berücksichtigt werden, gleich einer ganzzahligen Zweierpotenz ist.

4. Geber nach Anspruch 1, **dadurch gekennzeichnet**, daß der Ausgang (25) des Vergleichers (21) das Fehlersignal (SD) erzeugt, das außerdem an entsprechende Eingänge (26) für die Schreibfreigabe im Register (24) und (28) für die Rechenfreigabe der Schaltung (27) zur Berechnung des gleitenden Durchschnitts zurückgeleitet wird.

5. Geber nach einem der vorangehenden Ansprüche, **dadurch gekennzeichnet**, daß das Fehlersignal (SD) an ein Fehlerbestätigungsmittel (37, 47) übertragen wird, das ein bestätigtes Fehlersignal (SDC) für eine Auswertungsvorrichtung des Gebers erzeugt.

6. Geber nach Anspruch 5, **dadurch gekennzeichnet**, daß das Bestätigungsmittel einen Zähler (38) umfaßt, der beim Auftreten eines Fehlers (SD) an seinem Zählfreigabeeingang (37) ein periodisches Signal wie die Anzahl der Zähne beim Signal (SLDP) der Phasenübergänge des Lesesignals (6) zählt, das an seinen Takteingang (39) übertragen wird, wobei der Zählausgang (40) an einen ersten Eingang (41) eines Vergleichers (42) geleitet wird, dessen zweiter Eingang (44) an den Leseausgang (45) eines Registers (46) angeschlossen ist, das die Anzahl der gezählten Zähne zwischen zwei aufeinanderfolgenden Fehlern enthält, wobei der Zählausgang (47) das bestätigte Fehlersignal (SDC) erzeugt.

7. Geber nach Anspruch 6, **dadurch gekennzeichnet**, daß das Register (46) über seinen Schreibeingang (43) aktualsiert wird, sobald ein neuer Fehler durch das Fehlersignal (SD) erfaßt wird, das an seinen Schreibfreigabeeingang (35) angeschlossen ist.

8. Geber nach Anspruch 7, **dadurch gekennzeichnet**, daß der Zähler (38) zurückgestellt wird, sobald das bestätigte Fehlersignal (SDC) in seinen aktiven Zustand übergeht.

9. Geber nach einem der vorangehenden Ansprüche, **dadurch gekennzeichnet**, daß er einen nichtflüchtigen überschreibbaren Speicher unter der Steuerung der Vorrichtung zur Auswertung des Signals (6) umfaßt, in dem die Zeitpunkte und die Art der Fehler abgespeichert werden, wobei der Speicher, beispielsweise in elektrisch programmierbarer und löschbarer Ausführung, durch die Vorrichtung selbst oder durch eine Diagnosevorrichtung betrieben wird, die für die Wartung und die Instandsetzung bestimmt ist.

10. Anwendung eines Gebers nach einem der vorangehenden Ansprüche als Geschwindigkeitsgeber eines Fahrzeugs, das mit einer Hilfskraftlenkanlage für die gelenkten Räder ausgerüstet ist, und/oder als Drehzahlgeber für den Verbrennungsmotor eines solchen Fahrzeugs.

## Claims

1. An incremental sensor, such as a speed sensor, of the kind comprising a movable element having teeth which pass in front of at least one reading member for producing a reading signal, which represents the position and/or the speed of the movable element and which is transmitted to a means for measuring the time period separating two successive phases of the signal, the output signal from the said measuring means being transmitted to a means for producing a fault signal (FS) when the output signal varies non-continuously, the means for measuring the time period that separates two successive phases of the reading signal comprising a clock having a frequency very much higher than that of the reading signal, and which is provided at its input with a counter (15) which starts in a first phase of the reading signal and which is read during a corresponding later phase, characterised in that the output of the counter is transmitted as a first input (22) of a comparator (21), a second input (23) of which receives a reference signal produced by a reference register (24), with an output (25) of the comparator passing to the active state if the value counted exceeds the said reference value, and in that the reference value is obtained from a plurality of preceding values of the reading signal, by means of a circuit (27) for computing a sliding mean.

2. A sensor according to Claim 1, characterised in that, at each instance t, the reference value is equal to twice the value (SMt) of the sliding mean, and is obtained by means of a leftward offset, by one step, of the binary number that represents the said value at the output (29) of the circuit (27) for computing a sliding mean.

3. A sensor according to Claim 1, characterised in that the number of preceding values of the reading signal taken into account for the computation of the sliding mean is equal to a whole power of 2.

4. A sensor according to Claim 1, characterised in that the output (25) of the comparator (21) produces the fault signal (FS), which is also fed back to a suitable input (26) for authorising writing in the register (24), and a suitable input (28) for authorising computation by the circuit (27) for computing the sliding mean.

5. A sensor according to one of the preceding Claims, characterised in that the fault signal (FS) is transmitted to a means (37, 47) for confirmation of the fault, which produces a confirmed fault signal (CFS) to be received by a means responsive to the sensor.

6. A sensor according to Claim 5, characterised in that the confirmation means comprises a counter (38) which, on the occurrence of a fault signal (FS) on its input (37) for authorising counting, counts a periodic signal, such as the number of peaks in the signal (SLDP) representing the phase transitions in the reading signal (6) which is transmitted on its clock input (39) the signal from the counter output (40) being taken to a first input (41) of a comparator (42), a second input (44) of which is connected to the read output (45) of a register (46) that contains the number of peaks counted between two successive faults, with the counted signal output (47) producing the confirmed fault signal (CFS).

7. A sensor according to Claim 6, characterised in that the register (46) is zeroed by its write input (43) once a new fault is detected by the fault signal (FS) connected to its write authorisation input (35).

8. A sensor according to Claim 7, characterised in that the counter (38) is zeroed once the confirmed fault signal (CFS) passes to the active state.

9. A sensor according to one of the preceding Claims, characterised in that it includes a non-volatile writing memory which is under the control of the device (6) which is responsive to the sensor signal and which records the dates and the nature of the faults, with the memory, which is for example of the electrically programmable and erasable type, being used by the said device, or by a diagnostic device reserved for maintenance and repair purposes.

10. The use of a sensor in accordance with one of the preceding Claims as a speed sensor in a vehicle equipped with power assisted steering of the steerable road wheels, and/or as a sensor for sensing the running speed of the heat engine of such a vehicle.
